(19) Europäisches Patentamt
European Patent Office
Office européen des brevets

(11) Publication number: 0 333 823 B1

# (12) EUROPEAN PATENT SPECIFICATION

(45) Date of publication of patent specification: 27.11.91 Bulletin 91/48

(51) Int. Cl.$^5$: G01N 29/02

(21) Application number: 88908720.1

(22) Date of filing: 30.09.88

(86) International application number: PCT/GB88/00802

(87) International publication number: WO 89/03035 06.04.89 Gazette 89/08

## (54) INVESTIGATING PROPERTIES OF FLUIDS.

(30) Priority: 02.10.87 GB 8723148

(43) Date of publication of application: 27.09.89 Bulletin 89/39

(45) Publication of the grant of the patent: 27.11.91 Bulletin 91/48

(84) Designated Contracting States: AT BE CH DE FR GB IT LI LU NL SE

(56) References cited:
DE-B- 2 211 611
DE-B- 2 647 184
GB-A- 2 130 723
Derwent's abstract, No. 87 128 170/18, SU 12 575 101, publ. week 8718

(73) Proprietor: The Public Health Laboratory Service Board
61 Colindale Avenue
London NW9 5EQ (GB)

(72) Inventor: ZAMAN-FARAHANI, Freidoun Game Lodge
Fyfield Road Weyhill, Andover
Hampshire (GB)
Inventor: CLARKE, David, John Carefree, Rivermead
Idmiston Salisbury
Wiltshire (GB)

(74) Representative: Garratt, Peter Douglas et al
Mathys & Squire 10 Fleet Street
London EC4Y 1AY (GB)

EP 0 333 823 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to apparatus and methods for investigating properties of fluids and, in the most important example, for investigating microorganisms and other biological material suspended in a fluid medium.

It is an object of the invention to provide improved apparatus which is mechanically simple, robust, reliable and compact ; these properties being particularly important for apparatus to be used with biological reactors or similar processing plant.

Accordingly, the present invention consists in one aspect in apparatus for investigating properties of a fluid, comprising an acoustic cavity adapted to receive a sample of said fluid ; at least one electrically conducting transducer element forming at least part of the wall of said cavity and so arranged that vibratory motion of the or one said transducer element is influenced by acoustic wave propagation in the cavity ; and electromagnetic coupling means for exciting and monitoring said vibratory motion, the electromagnetic coupling means comprising induction coil means adjacent the or each transducer element ; means for establishing a magnetic field at the or each transducer element ; oscillator means for driving a time varying electrical current in the induction coil means and detector means for monitoring current flow in the induction coil means.

Advantageously, said transducer element is of cylindrical form.

Suitably, the acoustic cavity is bounded by the interior cylindrical surface of the transducer element.

Alternatively, a coaxial reflecting cylinder is disposed around the cylindrical transducer element to define therebetween an annular acoustic cavity.

In another form of the invention, said transducer element is planar.

In another aspect, the present invention consists in a method of investigating a sample of microorganisms or other biological material suspended in a fluid, comprising the steps of positioning said sample in an acoustic cavity bounded at least in part by a rigid and electrically conducting transducer element ; applying a magnetic field to the transducer element ; inducing current flow in the transducer element to excite vibration thereof leading to acoustic wave propagation in the sample ; monitoring the current induced in the same or a like transducer element as a result of the impingement thereon of said acoustic waves ; and deriving from the parameters of said monitored current, information relating to the properties of the sample.

The present invention will now be described by way of example with reference to the accompanying drawings in which :

Figure 1 is a diagrammatic representation of a known technique ;

Figure 2 is a sketch of one embodiment of this invention ;

Figure 3 is a circuit diagram, partly in block form, showing a detector for use in accordance with this invention ;

Figure 4 is a series of graphs illustrating the techniques employed by the detector of Figure 3 ;

Figure 5 is a sketch illustrating a modification to the embodiment of Figure 2 ; and

Figures 6, 7 and 8 are sketches respectively illustrating further embodiments according to this invention.

For a clearer understanding of the present invention, it is thought helpful to refer to a known technique for investigating metal samples, by which surface acoustic waves in the sample are generated and detected electromagnetically.

Referring to Figure 1, a magnetic field B is established at the surface of a metal sample. In this example the field is tangential but in other arrangements a field normal to the surface is employed. An alternating current in a transmitter coil T causes eddy currents to flow at the sample surface, those currents resulting, under the action of the applied magnetic field, in mechanical displacements which are propagated as a surface acoustic wave along the sample. By the inverse of this electromagnetic coupling, the surface acoustic wave is detected at a receiver coil R by measurement of the induced voltage.

This effect was first noted in 1939 (PHYS. REV. 56 Pages 343 1939) and a useful review is to be found in volume 14 of Physical Acoustics edited by W.P. Mason, Academic Press 1979. The technique has a low coupling efficiency restricted by theoretical constraints and has therefore found use primarily where alternative techniques which require physical contact with the metal sample are not possible or where the temperature is too high for conventional ceramic or crystal transducers. Typical applications for the technique are non-destructive testing and the quality control of hot metal billets. As a result of the low efficiency, it is usual to employ large currents in short pulses. The apparatus is necessarily large and expensive and the precision of measurement, whilst adequate for flaw detection, is not high.

In accordance with the present invention, a variation of this known technique of electromagnetic generation and detection of ultrasonic waves is employed in an ingenious manner for the investigation of, for example, the concentration of a bacterial suspension in a fluid medium.

Reference is now directed to Figure 2, which illustrates one embodiment of the apparatus according to this invention. A metallic pipe 10 carries the suspension under test. A coil 12 of copper wire is arranged around the

pipe with a small air gap left between the coil and the pipe. At opposite ends of the coil, rings magnets 14 are arranged coaxially with the pipe, these ring magnets being arranged with opposite poles facing so as to provide a magnetic field parallel to the axis of the pipe over its exterior surface. The coil and the ring magnets are covered by a protective sleeve 16. The interior of the pipe 10 may if desired be suitably coated, provided that the transfer of acoustic energy to and from the sample is not unduly impeded.

An alternating current is applied to the coil 12 to induce in the metallic pipe 10 eddy currents which will flow in circles around the axis of the pipe on the outer surface. The induced current density J will be proportional to $V \times H$ where H is the magnetic field. In the presence of the static magnetic field B, the Lorentz force $J \times B$ will couple to the ionic lattice of the metal through these currents and a compressional acoustic wave will propagate through the sample towards the axis of the pipe. It will be understood that by the inverse effect, acoustic waves incident upon the pipe will result in a current flow in the coil. This current, with the information it contains concerning the sample, can be detected and analysed.

As mentioned above, the efficiency of the electromagnetic acoustic coupling is very low so that the detector current in the coil is small compared to the driven current. In this example, however, the frequency of the driven coil current is swept through a frequency range in which standing wave resonancies are expected in the pipe. At these resonancies, the amplitude of the acoustic wave at the surface will be increased Q-fold with a comparable drop in coil impedance. Although still small, this drop in impedance can be detected by RF measurement techniques.

Referring now to Figure 3, an LCR equivalent circuit of the coil 12 is seen to be connected between line 50 and ground. Line 50 extends between constant current oscillator 52 and the input of RF amplifier 54. The frequency of the oscillator 52 is governed by a FM modulator reference 56 under the control of a frequency scanning unit 58. The output of the RF amplifier is AM detected and taken to a phase sensitive detector 60 which also receives an input from the reference oscillator 56 for phase comparison. The output of the phase sensitive detector 60 is monitored by a second harmonic null detector 62, which passes an output to processor 64. As will be more fully described, processor 64 is capable of determining values of density, sound velocity, attenuation or dispersion in the sample using the frequency spacing between consecutive resonant frequencies and with knowledge of the equation of motion of the combined liquid and pipe system.

As the frequency of the constant current oscillator 52 passes through a resonant frequency of the system, it will be understood that there is a change in the phase relationship between the amplitude modulated signal and the frequency modulation provided by the reference 46. This change of phase can be detected with great accuracy by the phase sensitive detector 60, enabling the processor to identify exact resonant frequencies.

The attenuation of the acoustic wave in the sample can also be accurately measured by noting that the power P transmitted at frequencies near resonance is given by

$$P = P_o(1 + Q^2(w/w_R - w_R/w)^2)^{-1}$$

where w is the angular frequency and $w_R$ is the angular frequency at resonance.

In a weakly coupled system where $Q = w_R/2\,c$, the attenuation $\alpha$ can be quoted as

$$\alpha = \sqrt{3}\,(w_2 - w_1)/2c$$

where c is the velocity of sound in the sample and $w_1$ and $w_2$ are frequencies of the inflectional points of the response curve shown in Figure 4. Looking at that drawing, it will be recognised that the inflectional points of the response curve are most accurately determined using the first and second derivatives of the phase sensitive detector output. The null points in the second derivative of the phase sensitive detector output are determined and, in a preferred embodiment, used as error signals in a second feedback loop to lock the oscillator at either of the null points. In this way, an accurate measure is determined of the attenuation of sound waves in the sample.

In practice, under the control of the processor 64, the detection system functions sequentially using either the described phase change or second derivative null point methods to read the two inflectional and one peak resonant frequencies. This process is repeated over a series, typically five to twenty, of consecutive resonances, to calculate density, sound velocity and attenuation.

In order to derive a density value, and hence a value for the concentration of microorganisms, from a measured resonance frequency, it is necessary to consider the acoustic impedance of the composite system comprising the pipe 10 and the sample contained within it. Utilising a cylindrical coordinate system, it can be shown that the solid part has an impedance $Z_s$ as a function of radius r which is given by :

$$Z_s(r) = d_s c_s \frac{J_o(k_s.r) + (B/A)\ Y_o(k_s.r)}{J_1(k_s.r) + (B/A)\ Y_1(k_s.r)} - \frac{2S}{k_s.r}$$

and the impedance of the liquid part $Z_1$ is given by

$$Z_1(r) = d_1 c_1 \frac{J_o(k_1.r)}{J_1(k_1.r)}$$

where $k_s$ is the wave vector in the solid (of magnitude $w/c_s$), $c_s$ is the velocity of sound in the solid and $d_s$ is the density of the solid. $k_1$, $c_1$ and $d_1$ have corresponding values for the liquid.

The parameter B/A is given by :

$$B/A = \frac{k_s bJ_o(k_s.b) - 2SJ_1(k_s.b)}{k_s bY_o(k_s.b) - 2SY_1(k_s.b)}$$

where S is the squared ratio of transverse to longitudinal wave velocity in the solid given by :

$$S = \frac{c_T^2}{c_L^2} = \frac{1 - 2\sigma}{2(1-\sigma)}$$

where a and b are the position vectors of the inner and outer peripheries of the tube and where $J_o$, $J_1$, $Y_o$ and $Y_1$ are Bessel functions.

Utilising the fact that at the resonant frequency, the impedance of the solid and liquid must be matched at the boundary (r = a) it can be shown that :

$$c_1 J_o(k_1 \cdot a) - Z_s(a) J_1(k_1 \cdot a) \,.\, d_1^{-1} = 0$$

As can be seen, these functions are oscillatory, implying a multitude of resonant frequencies. By solving the equation for many resonances, it is possible to determine $c_1$ and $d_1$.

In order to determine the concentration of, for example, bacteria in a suspension, a measure of density can be obtained first of the suspension and second of the fluid from which bacteria have been removed. Referring to Figure 5, there is illustrated a modification in which the ends of the pipe 10 are covered by a microporous filter cap 18. This enables a measure to be made of the density of the fluid alone, and from the two measurements a value can be obtained for the concentration of microorganisms.

An alternative embodiment according to this invention is illustrated in Figure 6. In this embodiment, the solenoid coil 12′ is placed within the pipe 10′, which no longer conveys the sample. The magnets 14′ are formed as discs and similarly lie with the pipe 10′. A coaxial reflecting cylinder 17 is disposed around the pipe 10′ so that an annular acoustic cavity 19 is defined between the pipe 10′ and the reflecting cylinder 17.

In use of the embodiment illustrated in Figure 6, sample is passed through the annular acoustic cavity 19. Acoustic waves generated in the pipe 10′ are transmitted through the sample, reflected by the cylinder 19 to pass again through the sample before impinging upon the pipe 10′. The manner in which resonant frequencies are detected in this embodiment is entirely analagous with that described above.

Referring now to Figure 7, a further embodiment is illustrated in which the geometry of the generating coil shown in Figure 6 is maintained but with the reflecting cylinder replaced by a separate receiving coil assembly. Thus, the annular acoustic cavity 19′is bounded outwardly by an electrically conducting cylinder 20 carrying a coil 22. In the detection circuit, the coils 12′ and 22 can be connected as part of the same tank circuit, whether in series or in parallel.

A still further modification will now be described with reference to Figure 8. There is there shown the cylindrical end portion 34 of a probe device. The free end of the probe is closed by an acoustic disc 32 and a short

distance inward of this disc there is provided a transducer disc 24. An acoustic cavity is defined between the two discs and communicates with the exterior of the probe through pores provided in the cylindrical wall portion 26.

Annular and disc magnets 28 and 30 respectively are disposed on a backing plate behind the transducer disc and an electrical coil (not shown) is wound between the magnets with a small air gap being left between the coil and the tranducer element.

The probe form of construction is especially useful where the density or other properties are to be determined of a fluid in a bulk container. The probe can in a simple manner be inserted through the container wall. Those elements of the probe that contact the sample lend themselves readily to cleaning and if necessary to sterilisation. If it is desired to obtain density measurements of both a composite suspension and a fluid medium, two similar probes can be employed with the pores in the wall portions 30 of the two probes being selected so that, in one probe, cells can freely enter the acoustic cavity, whilst in the other probe cells are effectively filtered out leaving only the fluid medium in the acoustic cavity.

The manner of operation of the probe embodiment is analagous with that of Figure 6.

It should be understood that this invention has been described by way of examples only, and a variety of modifications are possible without departing from the scope of the invention. Thus, for example, the described metallic pipe can be replaced by other electrically conductive transducer elements. These need not of themselves define an acoustic cavity containing the sample, and may form only part of the wall of such a cavity. A wide variety of geometries can be employed, as will be apparent to the skilled man. If desired, information relating to the concentration of bacteria or other particles suspended in the fluid sample, can be obtained in appropriate cases from the resonance pulse width, leading as explained to information regarding acoustic attenuation in the sample.

Whilst the described apparatus is believed to be of particular benefit in the measurement of microorganism concentration and similar determinations, it is not to be regarded as so limited and will find application in the measurement of density, speed of sound, acoustic attenuation or other parameters in a range of fluids.

## Claims

1. Apparatus for investigating properties of a fluid, comprising an acoustic cavity (19, 19') adapted to receive a sample of said fluid ; at least one electrically conducting transducer element (10, 10', 24) forming at least part of the wall of said cavity (19, 19') and so arranged that vibratory motion of the or one said transducer element (10, 10', 24) is influenced by acoustic wave propagation in the cavity (19, 19') ; and electromagnetic coupling means for exciting and monitoring said vibratory motion, the electromagnetic coupling means comprising induction coil means (12, 12') adjacent the or each transducer element ; means (14, 14', 28, 30) for establishing a magnetic field at the or each transducer element ; oscillator means (52) for driving a time varying electrical current in the induction coil means (12, 12') and detector means for monitoring current flow in the induction coil means (12, 12').

2. Apparatus according to Claim 1, wherein said transducer element (10, 10') is of cylindrical form.

3. Apparatus according to Claim 2, wherein the acoustic cavity is bounded by the interior cylindrical surface of the transducer element (10).

4. Apparatus according to Claim 2, wherein a coaxial reflecting cylinder (17) is disposed around the cylindrical transducer element (10') to define therebetween an annular acoustic cavity (19).

5. Apparatus according to any one of the preceding claims, wherein said oscillator means (52) comprises means (56) for continuously varying the frequency of said time varying current.

6. Apparatus according to Claim 5, wherein said detector means comprises a phase sensitive amplitude detector (60) receiving a phase comparison input from said oscillator means (52).

7. A method of investigating a sample of microorganisms or other biological material suspended in a fluid, comprising the steps of positioning said sample in an acoustic cavity (19, 19') bounded at least in part by a rigid and electrically conducting transducer element (10, 10', 24) ; applying a magnetic field to the transducer element (10, 10', 24) ; inducing current flow in the transducer element to excite vibration thereof leading to acoustic wave propagation in the sample ; monitoring the current induced in the same or a like transducer element (10, 10', 24) as a result of the impingement thereon of said acoustic waves ; and deriving from the parameters of said monitored current, information relating to the properties of the sample.

8. A method according to Claim 7, wherein the frequency of vibration of said transducer element is swept through a frequency range so selected that acoustic resonance is excited in the cavity (19, 19'), the frequency at which the or each resonance occurs being monitored.

9. A method according to Claim 7, further comprising the step of repeating the determination after removal

of the microorganisms or other biological material from the sample.

## Patentansprüche

1. Vorrichtung zur Untersuchung von Eigenschaften einer Flüssigkeit, mit einem akustischen Hohlraum (19, 19'), der so ausgebildet ist, daß er eine Probe der Flüssigkeit aufnehmen kann, mit wenigstens einem elektrisch leitfähigen Wandlerelement (10, 10', 24), das mindestens einen Teil der Wandung des Hohlraumes (19, 19') bildet und so angeordnet ist, daß eine Schwingbewegung des Wandlerelements oder der Wandlerelemente (10, 10', 24) durch Schallwellenausbreitung in dem Hohlraum (19, 19') beeinflußt wird, mit einer elektromagnetischen Kopplungseinrichtung, um die Schwingbewegung anzuregen und zu überwachen, wobei die elektromagnetische Kopplungseinrichtung eine Einrichtung mit Induktionsspule (12, 12') aufweisen, die an dem Wandlerelement oder den Wandlerelementen angrenzt, mit einer Einrichtung (14, 14', 28, 30), um ein Magnetfeld im Bereich des Wandlerelementes oder der Wandlerelemente zu erzeugen, mit einer Oszillatoreinrichtung (52), um einen zeitvarianten elektrischen Strom an die Einrichtung mit Induktionsspule (12, 12') anzulegen, und mit einer Detektoreinrichtung, um den Stromfluß in der Einrichtung mit Induktionsspule (12, 12') aufzuzeichnen.

2. Vorrichtung nach Anspruch 1, bei welcher das Wandlerelement (10, 10') eine zylindrische Form aufweist.

3. Vorrichtung nach Anspruch 2, bei welcher der akustische Hohlraum durch die innere zylindrische Oberfläche des Wandlerelements (10) begrenzt wird.

4. Vorrichtung nach Anspruch 2, bei welcher ein koaxialer Reflexionszylinder (17) um das zylindrische Wandlerelement (10') vorgesehen ist, um einen ringförmigen akustischen Hohlraum (19) dazwischen zu bilden.

5. Vorrichtung nach einem der vorhergehenden Ansprüche, bei welcher die Oszillatoreinrichtung (52) eine Einrichtung (56) zur kontinuierlichen Änderung der Frequenz des zeitvarianten Stroms aufweist.

6. Vorrichtung nach Anspruch 5, bei welcher die Detektoreinrichtung einen phasenempfindlichen Amplitudendetektor (60) aufweist, der ein Phasenvergleichs-Eingangssignal von der Oszillatoreinrichtung (52) empfängt.

7. Verfahren zur Untersuchung einer Probe von Mikroorganismen oder anderen in einer Flüssigkeit suspendierten biologischen Materials, mit den Schritten, daß die Probe in einem akustischen Hohlraum (19, 19') plaziert wird, der wenigstens teilweise durch ein starres und elektrisch leitfähiges Wandlerelement (10, 10', 24) begrenzt wird, daß ein Magnetfeld im Bereich des Wandlerelements (10, 10', 24) erzeugt wird, das einen Stromfluß in dem Wandlerelement induziert, um es zum Schwingen anzuregen, was zu einer Schallwellenausbreitung in der Probe führt, daß weiterhin der Strom, welcher in das selbe oder ein anderes Wandlerelement (10, 10', 24) als Ergebnis eines Auftreffens der Schallwellen darauf induziert wird, überwacht wird, und daß aus den Kennwerten des überwachten Stroms Informationen über die Eigenschaften der Probe gewonnen werden.

8. Verfahren nach Anspruch 7, bei welchem die Frequenz der Schwingbewegung des Wandlerelements einen Frequenzbereich durchstreicht, der so gewählt ist, daß eine akustische Resonanz in dem Hohlraum (19, 19') angeregt wird, wobei die Frequenz, bei welcher die Resonanz oder die Resonanzen auftreten, überwacht werden.

9. Verfahren nach Anspruch 7, mit weiterem folgenden Schritt, daß nach der Entfernung der Mikroorganismen oder des anderen biologischen Materials aus der Probe die Messung wiederholt wird.

## Revendications

1. Appareil pour l'étude des propriétés d'un fluide, comprenant une cavité acoustique (19, 19') prévue pour recevoir un échantillon du dit fluide ; au moins un élément de transduction électriquement conducteur (10, 10', 24) formant au moins une partie de la paroi de ladite cavité (19, 19') et agencé de sorte que le mouvement vibratoire de l'élément ou d'undit élément de transduction (10, 10', 24) est influencé par la propagation d'ondes acoustiques dans la cavité (19, 19') ; et des moyens de couplage électromagnétique pour exciter et détecter ledit mouvement vibratoire, les moyens de couplage électromagnétique comprenant un enroulement d'induction (12, 12') adjacent à l'élément ou à chaque élément de transduction ; des moyens (14, 14', 28, 30) d'établissement d'un champ magnétique à l'endroit de l'élément ou de chaque élément de transduction ; un oscillateur (52) pour faire passer un courant électrique, variable dans le temps, dans l'enroulement d'induction (12, 12') ; et des moyens de détection pour mesurer la circulation de courant dans l'enroulement d'induction (12, 12').

2. Appareil suivant la revendication 1, dans lequel ledit élément de transduction (10, 10') est de forme cylindrique.

3. Appareil suivant la revendication 2, dans lequel la cavité acoustique est délimitée par la surface cylindrique intérieure de l'élément de transduction (10).

4. Appareil suivant la revendication 2, dans lequel un cylindre de réflexion coaxial (17) est disposé autour de l'élément de transduction cylindrique (10') de manière à définir entre eux une cavité acoustique annulaire (19).

5. Appareil suivant l'une quelconque des revendications précédentes, dans lequel ledit oscillateur (52) comporte des moyens (56) pour modifier de façon continue la fréquence dudit courant variable dans le temps.

6. Appareil suivant la revendication 5, dans lequel lesdits moyens de détection comprennent un détecteur d'amplitude sensible à la phase (60) recevant une entrée de comparaison de phase en provenance dudit oscillateur (52).

7. Méthode d'étude d'un échantillon de micro-organismes ou d'autres éléments biologiques en suspension dans un fluide, comprenant les opérations d'introduction dudit échantillon dans une cavité acoustique (19, 19') délimitée au moins en partie par un élément de transduction rigide et électriquement conducteur (10, 10', 24); application d'un champ magnétique à l'élément de transduction (10, 10', 24) ; induction d'une circulation de courant dns l'élément de transduction afin d'exciter sa vibration pour engendrer une propagation d'ondes acoustiques dans l'échantillon ; mesure du courant induit dans le même élément de transduction ou un élément analogue (10, 10', 24) comme résultat de l'incidence desdits ondes acoustiques sur cet élément ; et détermination, à partir des paramètres dudit courant mesuré, d'informations relatives aux propriétés de l'échantillon.

8. Méthode suivant la revendication 7, dans laquelle on déplace la fréquence de vibration dudit élément de transduction dans une plage de fréquence choisie de sorte qu'une résonance acoustique est excitée dans la cavité (19, 19'), la fréquence à laquelle la ou chaque résonance se produit étant mesurée.

9. Méthode suivant la revendication 7, comprenant en outre l'opération de répétition de la détermination,après élimination des micro-organismes ou autres matières biologiques de l'échantillon.

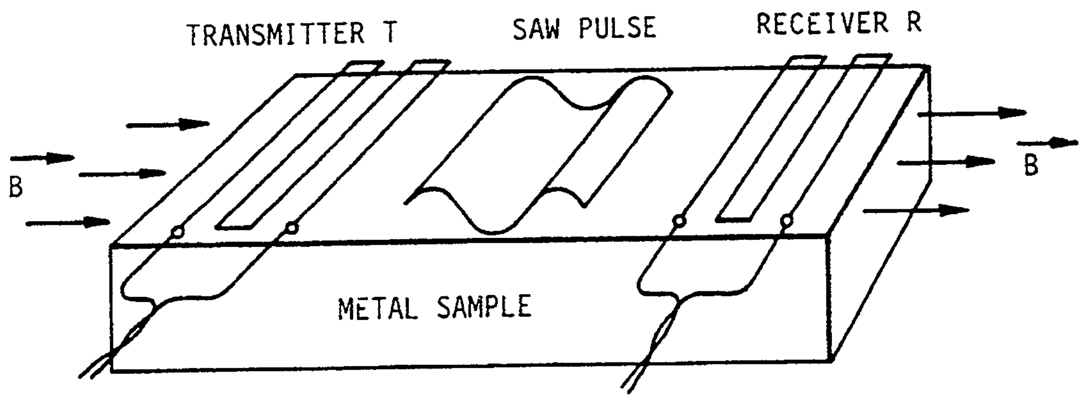


FIG.1

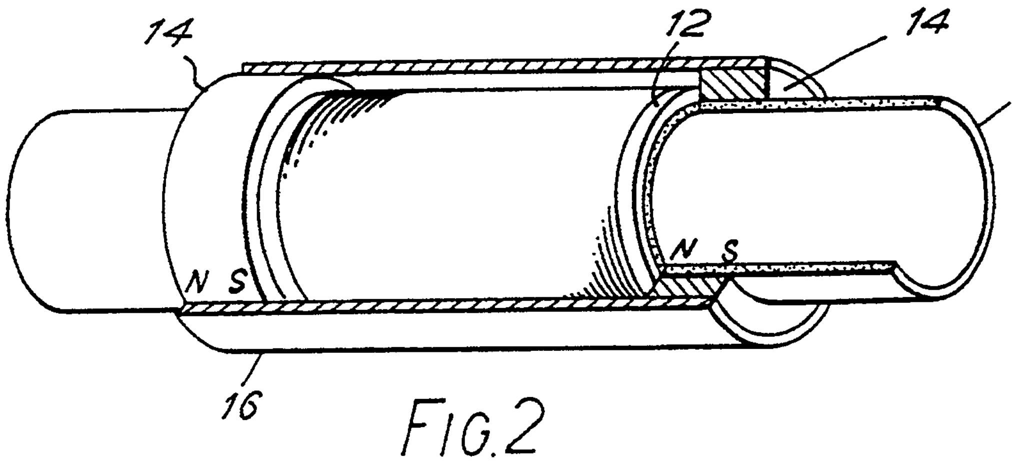


FIG.2

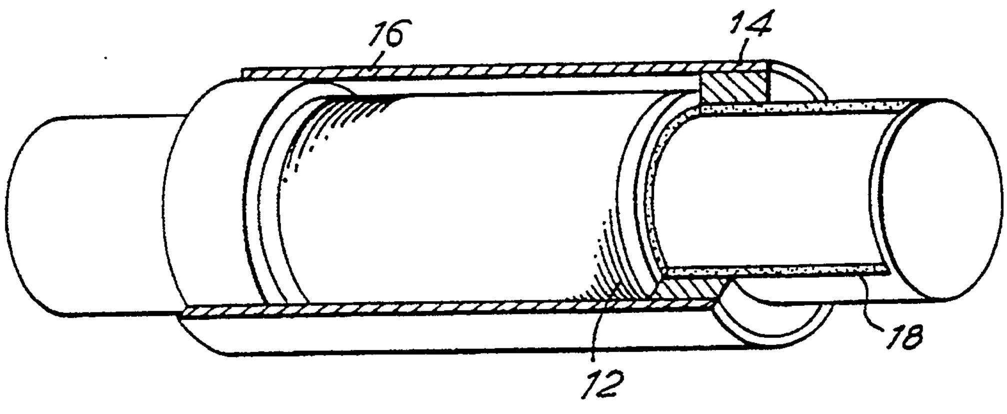


FIG.5

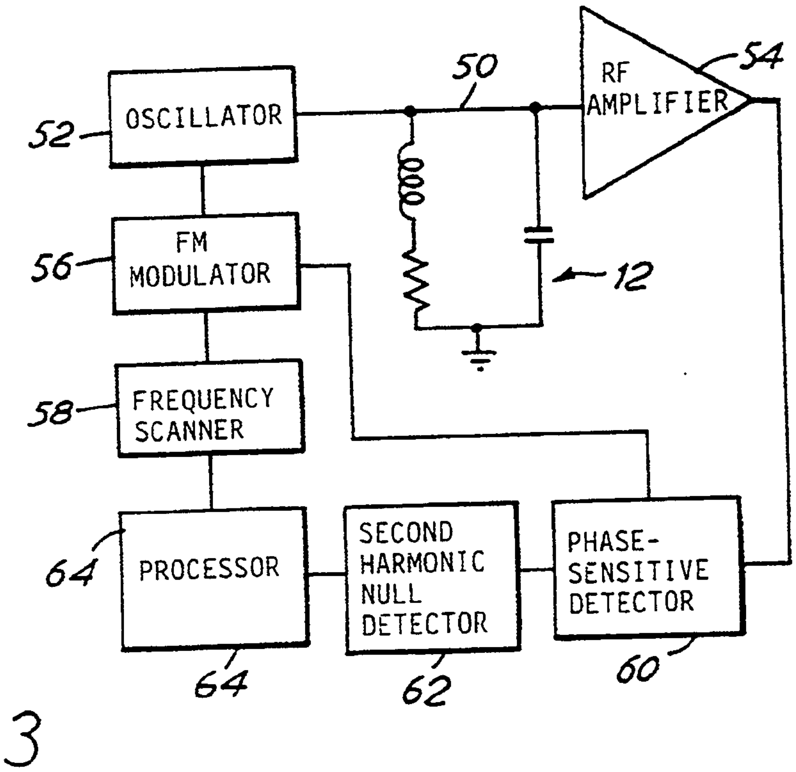
OSCILLATOR
52
50
RF AMPLIFIER
54
FM MODULATOR
56
12
FREQUENCY SCANNER
58
PROCESSOR
64
SECOND HARMONIC NULL DETECTOR
62
PHASE-SENSITIVE DETECTOR
60
64

FIG. 3

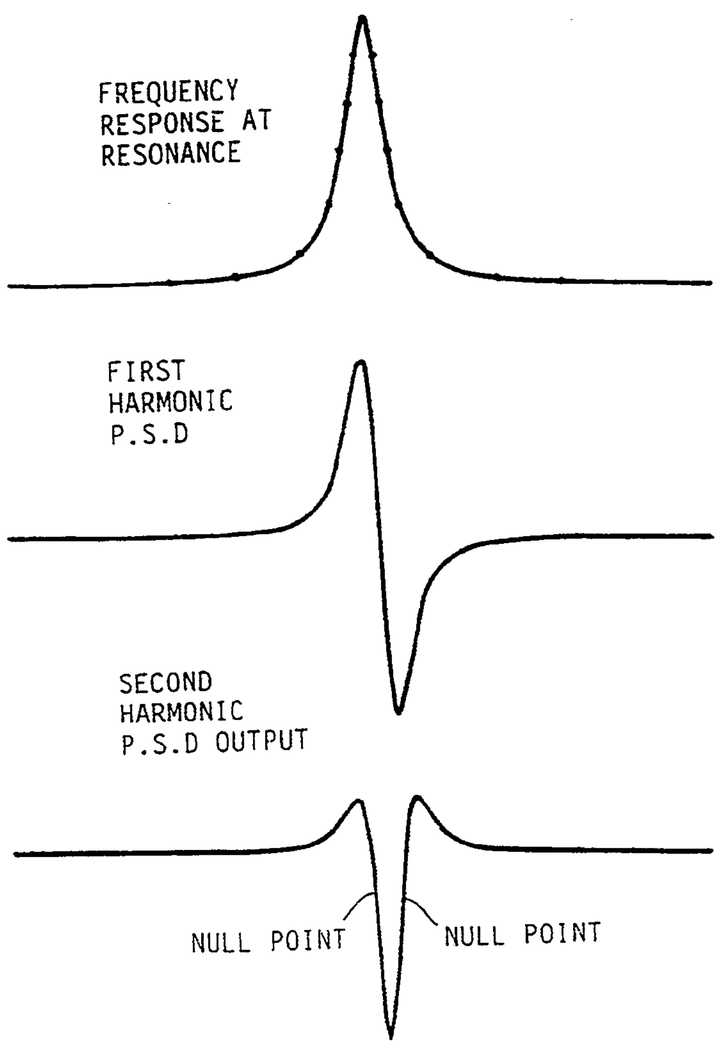
FREQUENCY RESPONSE AT RESONANCE
FIRST HARMONIC P.S.D
SECOND HARMONIC P.S.D OUTPUT
NULL POINT
NULL POINT

FIG. 4

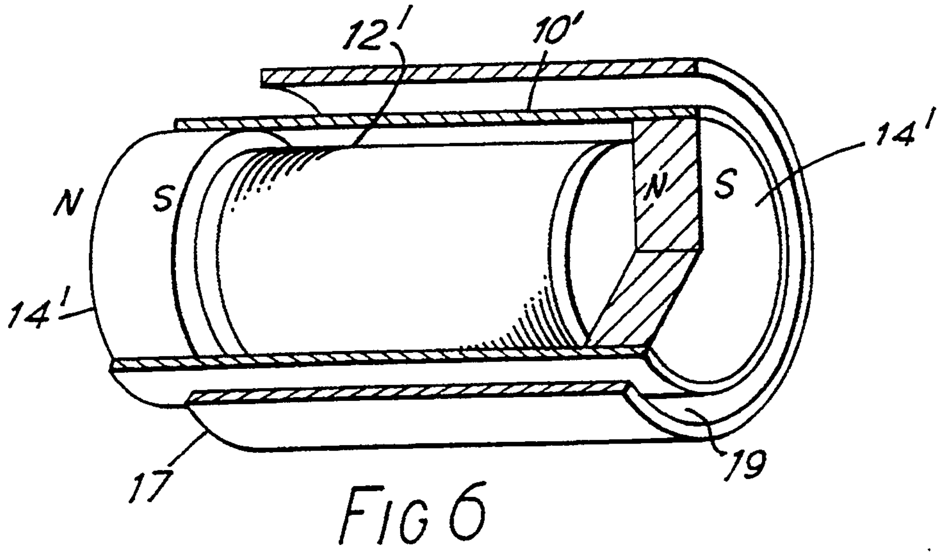


FIG 6

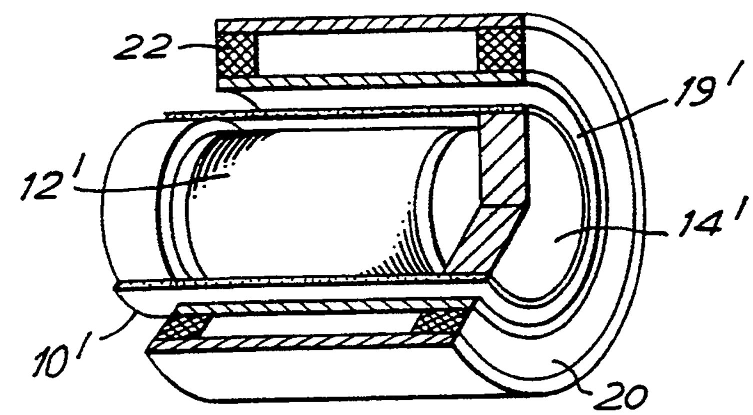


FIG 7

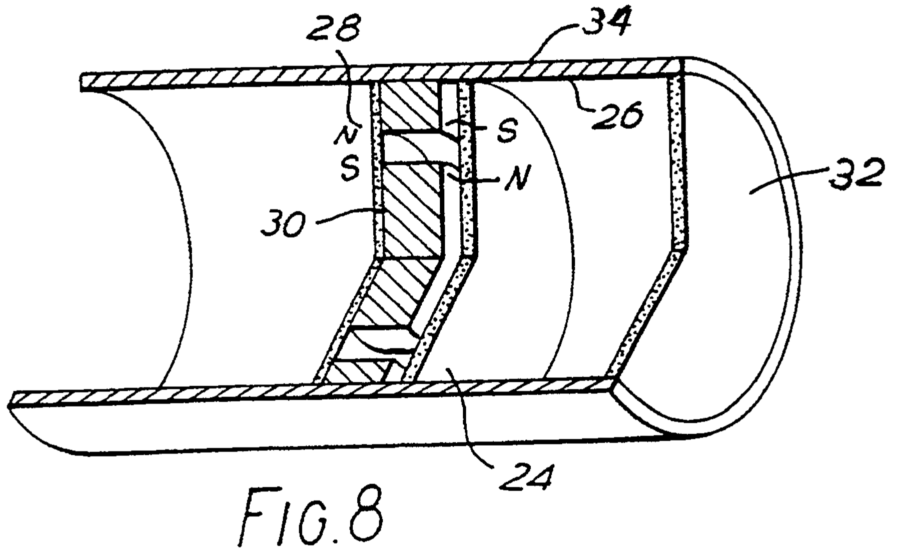


FIG.8